# EUROPEAN PATENT APPLICATION

(11) **EP 1 959 669 A1**
(43) Date of publication of application: **20.08.2008**
(21) Application number: 08100903.7
(22) Date of filing: 24.01.2008
(51) Int. Cl.: H04N 1/405

(54) **Image forming apparatus including video data processing device**

(30) Priority: 13.02.2007 KR 20070014906
(71) Applicant: Samsung Electronics Co., Ltd., Suwon-si, Gyeonggi-do 442-742 (KR)
(72) Inventor: Kim, Chi Hun, Gyeonggi-do (KR)
(74) Representative: Perkins, Dawn Elizabeth

(57) **Abstract**

An image forming apparatus including a video data processing device in which a video controller that outputs video data using a reference clock and print data is improved. A radio frequency component that is not output as an actual image is removed from the video data so that it is possible to reduce emission of electromagnetic waves and to prevent image quality from deteriorating.

## Description

Aspects of the present invention relate generally to an image forming apparatus including a video data processing device for reducing emission of electromagnetic waves (EMI) generated when video data is transmitted.

An image forming apparatus, such as a laser printer and a multifunction printer, includes a video controller that converts print data into video data and provides the video data to an exposure unit. An electrostatic latent image is formed in a photosensitive drum by the exposure unit. Toner is supplied to transfer a developed toner image to a printable medium, such as paper, supplied from a sheet cassette so as to print the image onto the printable medium.

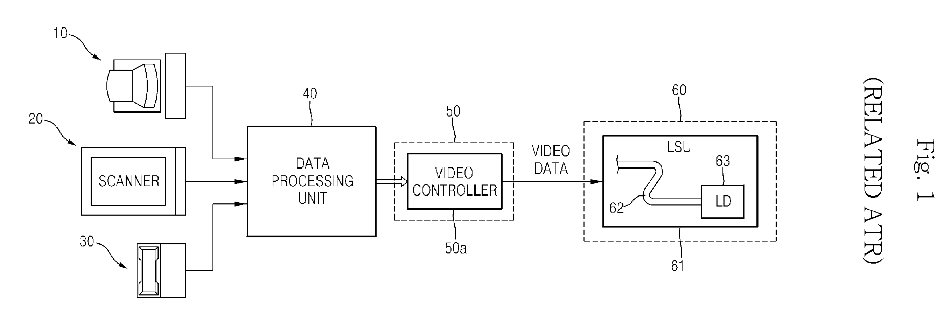

As shown in Figure 1, the image forming apparatus includes a data processing unit 40 connected to a personal computer (PC) 10, a scanner 20, and/or a facsimile 30 to separately receive print data from the PC 10, the scanner 20, and/or the facsimile 30, a video controller 50, and an exposure unit 60. The data processing unit 40 processes the print data received from one of the PC 10, the scanner 20, and the facsimile 30 so that a video controller 50 processes the print data.

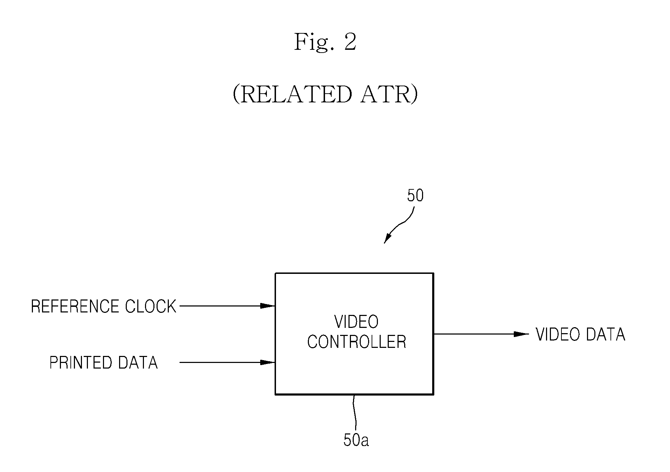

As shown in Figure 2, the video controller 50 generates video data based on a reference clock and the print data received from the data processing unit 40. The video controller 50 is formed of a chipset 50a to transmit the generated video data to the exposure unit 60 outside the chipset 50a. The exposure unit 60 provides the video data to a laser diode 63 through a signal cable 62 of a printed circuit board (PCB) 61. The video data turns on or off the laser diode 63 and controls the operation of the laser diode 63 so as to constitute a part of the exposure unit 60 to which the toner is adhered and a part to which the toner is not adhered so as to correspond to a printed output image. An algorithm for converting data is programmed into the video controller 50.

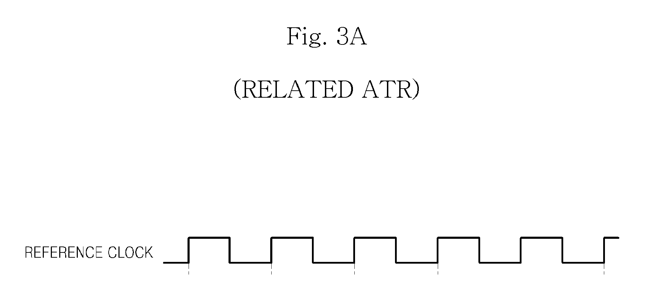

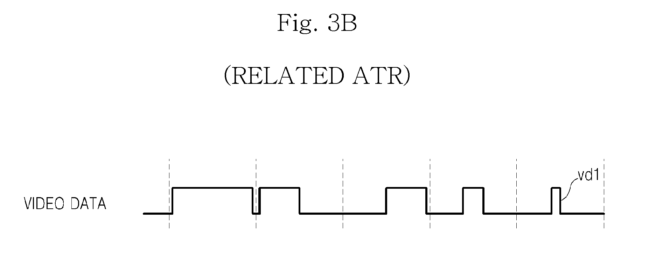

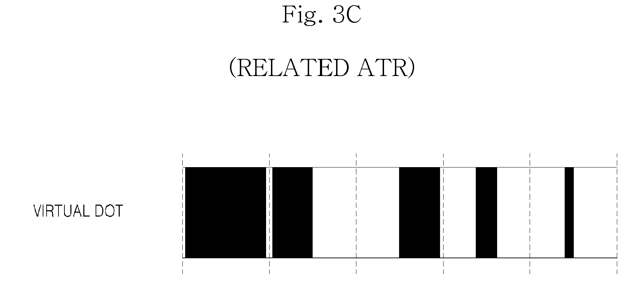

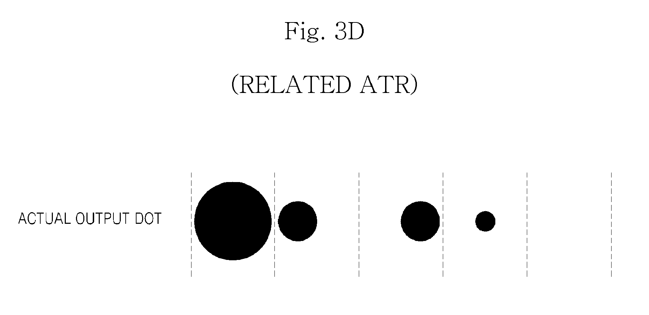

The video controller 50 changes the duty ratio of the video data using the programmed algorithm to improve image quality and outputs the video data. The video data, as shown in Figure 3B, generates a pulse column having a frequency different from the frequency of the reference clock, shown in Figure 3A, provided to the video controller 50 and having a duty ratio different from the duty ratio of the reference clock provided to the video controller 50.

Not all of the electrostatic latent images formed in the photosensitive drum are output as actual images. Although an electrostatic latent image is formed in the photosensitive drum, if the amount of the toner is insufficient to be adhered to the electrostatic latent image, the toner image is not formed, and no image is formed on the printable medium.

As shown in Figures 3A-3D, although the frequency is not changed by the video controller 50, since the duty ratio changes, the video data has more radio frequency components than the reference clock, as shown in Figure 3B. For example, if the video data includes a pulse vd1 having a very small width, a switching operation of being turned on or off is not performed due to limitations on the recognition of the laser diode 63. In addition, although the laser diode 63 performs the switching operation and virtual dots are output, actual dots are not formed on the printable medium.

Furthermore, since the video data is transmitted from a main board in which the video controller 50 is mounted to the laser diode 63 of the exposure unit 60 that emits the laser beam through the signal cable, the transmission channel is long so that, when a complicated picture is printed, electromagnetic interference (EMI) is generated by the radio frequency component of the video data.

As described above, since the radio frequency component included in the video data causes emission of electromagnetic interference during signal transmission, remedial measures are required. In addition, since the radio frequency component does not contribute significantly to image quality, such a radio frequency component can be removed without compromising the quality of an actually output image.

Aspects of the present invention provide an image forming apparatus including a video data processing device by which a radio frequency component that is included in video data and is not output as an actual image is removed so that it is possible to reduce electromagnetic interference (EMI) generated in the process of transmitting the video data and to prevent image quality from deteriorating.

According to an aspect of the present invention, an image forming apparatus is provided. The image forming apparatus includes a data processor to generate video data, a video controller to remove a radio frequency component included in the video data during generation of the video data so as to mitigate emission of electromagnetic interference, and to provide the video data to a light source of an exposure unit to be printed onto a printable medium.

According to another aspect of the present invention, the video controller includes a quasi-video data generator to receive a reference clock and print data and to generate quasi-video data based on the reference clock and the print data; and a filter to remove a pulses in the quasi-video data based on a magnitude of a width of the pulses.

According to another aspect of the present invention, the video controller further includes a storage unit to store information related to a reference pulse width.

According to another aspect of the present invention, the image forming apparatus further includes a data processing unit to provide the print data to the quasi-video data generator.

According to another aspect of the present invention, the data processing unit processes the print data received from one of a personal computer, a scanner, and a facsimile.

According to another aspect of the present invention, the reference pulse width is set to be in a range recognized by the light source of the exposure unit.

According to another aspect of the present invention, the light source is a laser diode.

According to another aspect of the present invention, the video data includes a pulse column having a frequency the same as a frequency of the reference clock and having a pulse width is different from the pulse width of the reference clock.

According to another aspect of the present invention, an image forming apparatus comprising a video data processing device is provided. The video data processing device includes a data processing unit to process print data received from one of a personal computer, a scanner, and a facsimile machine; a quasi-video data generator to generate quasi-video data based on a reference clock and the print data received from the data processing unit; a storage unit to store information related to a reference pulse width, a filter to remove pulses of the quasi-video data having a pulse width smaller than the reference pulse width and to output the processed quasi-video data as video data, and a light source to receive the video data and to output light so as to generate an electrostatic latent image to be printed onto a printable medium.

According to another aspect of the present invention, the quasi-video data generator, the storage unit, and the filter are provided in a main board and the exposure unit receives the video data through a signal cable connected to the main board.

According to another aspect of the present invention, the video data is generated as a pulse column having a frequency the same as a frequency of the reference clock and having a pulse width different from the pulse width of the reference clock.

According to another aspect of the present invention, the information related to the reference pulse width stored in the storage unit is based on a range of recognition of the light source.

According to another aspect of the present invention, the light source is a laser diode that receives the video data through the signal cable so as to be turned on or off and to emit a laser beam.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
Figure 1 is a block diagram of a conventional image forming apparatus;
Figure 2 is a block diagram of a conventional video controller;
Figures 3A-3D illustrate output timing diagrams of an output image of the conventional video controller;
Figure 4 is a block diagram of an improved video controller applied to an image forming apparatus according to an example embodiment of the present invention; and
Figures 5A-5E illustrate output timing diagrams of an output image of a video controller according to an example embodiment the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

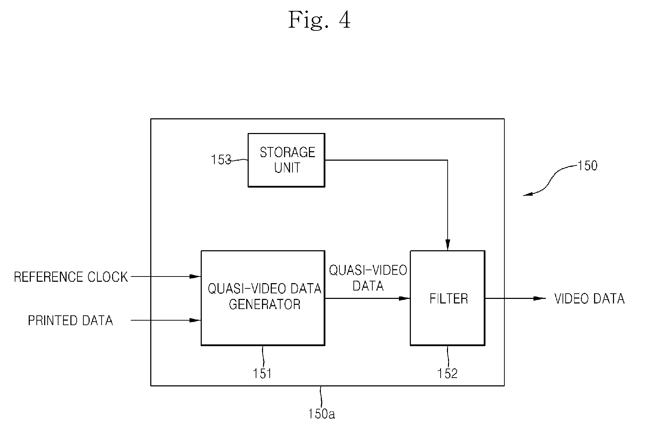

Figure 4 is a block diagram of an improved video data processing device applied to the image forming apparatus according to an example embodiment of the present invention. A video controller 150 includes a quasi-video data generator 151, a filter 152, and a storage unit 153. As shown in Figure 4, the video controller 150 receives a reference clock and print data, generates video data after removing a radio frequency component included in the video data, and outputs the generated video data to an exposure unit 60 outside a chipset 150a, which is similar to the conventional video controller. Such a video controller 150 may be formed by a the chipset 150a installed to transmit the generated video data to the exposure unit 60 outside the chipset 150a. The exposure unit 60 provides the video data to a laser diode 63 through a signal cable 62 of a printed circuit board (PCB) 61.

The video data received from the video controller 150 is used to control the operation of the laser diode 63, i.e., turns on/off the laser diode 63, so as to constitute a part of the exposure unit 60 to which the toner is adhered and a part to which the toner is not adhered so as to correspond to a printed output image. An algorithm for converting data is included in the video controller 150.

Referring back to Figure 4, the quasi-video data generator 151 receives the reference clock and the print data from the data processing unit 40, generates quasi-video data using the built-in algorithm, and provides the quasi-video data to the filter 152. The algorithm to improve image quality makes a frequency of the quasi-video data the same the frequency of the reference clock and changes a duty ratio of the quasi-video data. The quasi-video data is obtained as a result of processing the print data using the algorithm.

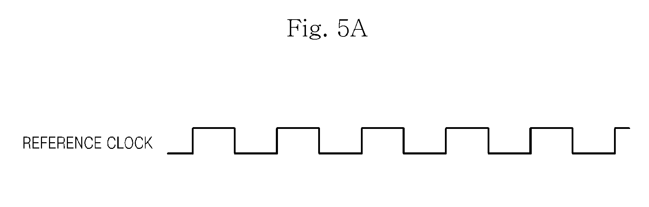

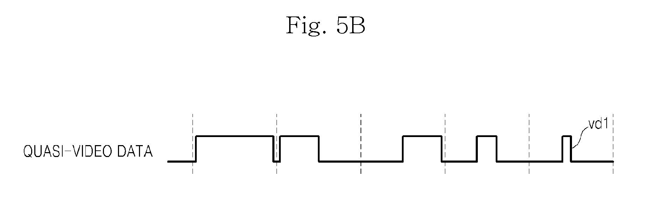

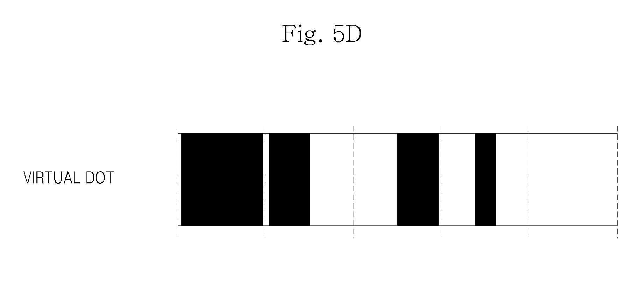

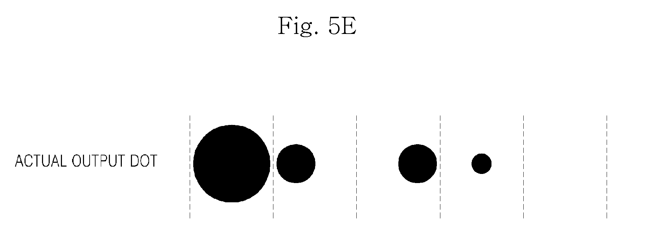

Turning now to Figures 5A-5E, timing diagrams of an output image are shown. The quasi-video data output from the quasi-video data generator 151, as shown in Figure 5B, may include a pulse vd1 having a very small width. The very narrow pulse vd1 is the radio frequency component. The radio frequency component may not be recognized by the laser diode 63, and so the switching operation of being turned on or off is not performed. Even if the laser diode 63 performs the switching operation, virtual dots are output as shown in Figure 5D and actual output dots are not formed on a printable medium, as shown in Figure 5E. The radio frequency component is thus an unnecessary component of the print data. As a result, removing the radio frequency component will not affect the image quality.

The filter 152 removes the very narrow pulse vd1 that is the radio frequency component included in the quasi-video data and transmits the video data from which the radio frequency component is removed to the exposure unit 60 outside the chipset 150a. The filter 152 determines whether a pulse is to be removed in accordance with the magnitude of the pulse width among the pulses of the video data. The filter 152 receives information from the storage unit 153 related to a reference pulse width used to determine whether to remove the pulse. The reference pulse width is set to be in a range where the laser diode 63, as shown in, for example, Figure 1, can recognize the operation of being turned on or off.

The filter 152 maintains a pulse state if the pulse width is not smaller than the reference pulse width, and removes the very narrow pulse vd1 that is the radio frequency component to output the video data when the pulse width is smaller than the reference pulse width.

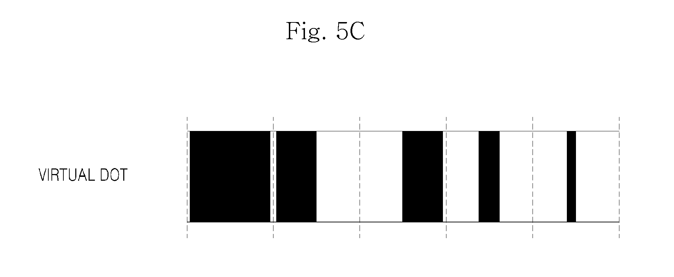

As shown in Figure 5, the video data from which the radio frequency component is removed by the filter 152 is transmitted to the laser diode 63 through the signal cable 62 of the exposure unit 60. As described above, in the process of transmitting the video data, electromagnetic interference (EMI) caused by the radio frequency component is significantly reduced.

Hereinafter, the operation of the video processing device of the image forming apparatus according to an embodiment of the present invention will be described. The data processing unit 40 separately receives print data from a personal computer (PC) 10, a scanner 20, and/or a facsimile 30, processes the received print data so as to be processed by the video controller 150, and provides the processed print data to the video controller 150. The quasi-video data generator 151 generates the quasi-video data based on the reference clock and the print data received from the data processing unit 40 and provides the quasi-video data to the filter 152.

The filter 152 receives the information related to the reference pulse width from the storage unit 153 to output the video data with a pulse maintained when a pulse width of the quasi-video data is not smaller than the reference pulse width and to output the video data from which very narrow pulses making up the radio frequency component is removed when a pulse width of the quasi-video data is smaller than the reference pulse width. The filter 152 transmits the video data from which the radio frequency component is removed to the exposure unit 60 outside the chipset 150a. The exposure unit 60 provides the video data from which the radio frequency component is removed to the laser diode 63 through the signal cable 62 of the PCB 61.

As described above, according to aspects of the present invention, the video controller removes the radio frequency component included in the video data to transmit the video data to the exposure unit so that it is possible to reduce the emission of the electromagnetic waves generated during the transmission of the video data without deteriorating the image quality of the printed output.

Although a few embodiments of the present invention have been shown and described, it would be appreciated by those skilled in the art that changes may be made in this embodiment without departing from the scope of the invention as defined in the claims.

## Claims

1. An image forming apparatus comprising:
a video controller (150) configured to generate video data from print data and to remove a radio frequency component included in the video data during generation of the video data so as to mitigate emission of electromagnetic interference, and to provide the video data to a light source (63) of an exposure unit (60) to be printed onto a printable medium.

2. The image forming apparatus as claimed in claim 1, wherein the video controller (150) comprises:
a quasi-video data generator (151) configured to receive a reference clock and print data and to generate quasi-video data based on the reference clock and the print data; and
a filter (152) configured to remove pulses in the quasi-video data based on a magnitude of a width of the pulses compared to a reference pulse width.

3. The image forming apparatus as claimed in claim 2, wherein the filter (152) is further configured to output the processed quasi-video data as video data.

4. The image forming apparatus as claimed in claim 2 or 3, wherein the filter (152) is configured to remove pulses having a pulse width smaller that the reference pulse width.

5. The image forming apparatus as claimed in claim 2, 3 or 4, wherein the video controller (150) further comprises a storage unit (153) configured to store information related to the reference pulse width.

6. The image forming apparatus as claimed in any one of claims 2 to 5, wherein the reference pulse width is set in a range recognized by the light source (63) of the exposure unit (60).

7. The image forming apparatus as claimed in claim 6, wherein the light source is a laser diode (63).

8. The image forming apparatus as claimed in any one of claims 2 to 7, wherein the video data comprises a pulse column having a frequency identical to a frequency of the reference clock and having a pulse width different from a pulse width of the reference clock.

9. The image forming apparatus as claimed in any one of the preceding claims, further comprising a data processing unit (40) configured to provide the print data to the video controller (150).

10. The image forming apparatus as claimed in claim 9, wherein the data processing unit (40) is configured to process the print data received from one of a personal computer, a scanner, and a facsimile.

11. The image forming apparatus as claimed in claim 5, wherein the quasi-video data generator (151), the storage unit (153), and the filter (152) are provided in a main board, and the exposure unit (60) receives the video data through a signal cable connected to the main board.

12. A method of mitigating electromagnetic interference generated by an image forming apparatus comprising generating video data from print data including removing a radio frequency component during generation of the video data and providing the video data to a light source (63) of an exposure unit (60) of the image forming apparatus.

13. The method of claim 12, comprising:
generating quasi-video data from the print data, corresponding to an image to be formed onto a printable medium;
removing radio frequency components of the quasi-video data having a pulse width smaller than a pulse width of a reference pulse width so as to generate video data and mitigate emission of electromagnetic interference; and
forming the image onto the printable medium corresponding to the video data.

14. The method of claim 13, wherein a width of the reference pulse is set in a range recognized by the light source (63) used to form the image onto the printable medium.

15. The method of claim 13 or 14, further comprising:
generating the quasi-video data based on a reference clock and print data corresponding to the image to be formed onto the printable medium.

16. The method of claim 15, wherein the video data comprises a pulse column having a frequency identical to a frequency of the reference clock used to generate the quasi-video data and having a pulse width different from a pulse width of the reference clock.

17. A computer readable medium having stored thereon a computer program comprising instructions for carrying out the method according to any one of claims 12 to 16.
